# EUROPEAN PATENT APPLICATION

(11) **EP 1 835 404 A2**
(43) Date of publication of application: **19.09.2007**
(21) Application number: 06253125.6
(22) Date of filing: 16.06.2006
(51) Int. Cl.: G06F 11/16

(54) **Electronic apparatus for detecting faults**

(30) Priority: 15.03.2006 JP 2006070804
(71) Applicant: FUJITSU LIMITED, Kawasaki-shi, Kanagawa 211-8588 (JP)
(72) Inventor: Machida, Mamoru, Kawasaki-shi Kanagawa 211-8588 (JP)
(74) Representative: Mohun, Stephen John

(57) **Abstract**

An electronic apparatus which is capable of detecting faults that cannot be detected with a fixed signal pattern and which also permits fault detection to be performed even during the operation thereof. Signal processor circuits perform identical signal processing, and a signal router causes the signal being input to an operating signal processor circuit which is performing the signal processing among the signal processor circuits, to be input to an idle signal processor circuit which is not performing the signal processing. A fault detector compares an operating output signal output from the operating signal processor circuit with an idle output signal output from the idle signal processor circuit to detect a fault.

## Description

### BACKGROUND OF THE INVENTION

### 1. Field of the Invention

The present invention relates to electronic apparatus, and more particularly, to an electronic apparatus for detecting faults.

### 2. Description of the Related Art

Fault detection methods are known in which a fixed signal pattern is input to a circuit and the output from the circuit is compared with the normal output result to detect a fault in the circuit. For example, a fault detection scheme has been proposed wherein a conversion circuit is provided with a verification channel and the output from the verification channel is compared with the expected value to detect a fault in the conversion circuit (e.g., Japanese Unexamined Patent Publication No. S60-226000). Also, a data transmission anomaly detection scheme is known in which input receive data is compared with transmit data applied to the input of a driver, and if the result of comparison shows non-coincidence, it is judged that the transmission of the transmit data is anomalous (e.g., Japanese Unexamined Patent Publication No. H07-160600).

However, it is sometimes the case that although a signal is output as expected when the fixed signal pattern is input, the expected value fails to be output when a different signal pattern is input, posing the problem that certain faults are undetectable with the fixed signal pattern.

Also, it is difficult to detect faults during the operation of electronic apparatus, and when fault detection is to be performed, the operation of the apparatus must be stopped.

### SUMMARY OF THE INVENTION

The present invention was created in view of the above circumstances, and an object thereof is to provide an electronic apparatus which is capable of detecting faults that cannot be detected with a fixed signal pattern and which also permits fault detection to be performed even during the operation thereof.

To achieve the object, there is provided an electronic apparatus for detecting faults. The electronic apparatus comprises a plurality of signal processor circuits for performing identical signal processing, a signal router for causing a signal being input to an operating signal processor circuit which is performing the signal processing among the signal processor circuits, to be input to one idle signal processor circuit which is not performing the signal processing among the signal processor circuits, and a fault detector for comparing an operating output signal output from the operating signal processor circuit with an idle output signal output from the idle signal processor circuit to detect a fault.

The above and other objects, features and advantages of the present invention will become apparent from the following description when taken in conjunction with the accompanying drawings which illustrate preferred embodiments of the present invention by way of example.

### BRIEF DESCRIPTION OF THE DRAWINGS

FIG. 1 illustrates an outline of an electronic apparatus.
FIG. 2 is a block diagram of an electronic apparatus according to a first embodiment.
FIG. 3 is a block diagram showing a comparator in detail.
FIG. 4 is a block diagram showing a fault detector in detail.
FIG. 5 is a block diagram of an electronic apparatus according to a second embodiment.
FIG. 6 is a flow diagram illustrating operation of the electronic apparatus.
FIG. 7 is a block diagram of an electronic apparatus according to a third embodiment.
FIG. 8 is a block diagram of an electronic apparatus according to a fourth embodiment.
FIG. 9 is a flow diagram illustrating operation of the electronic apparatus.
FIG. 10 is a block diagram of an electronic apparatus according to a fifth embodiment.
FIG. 11 is a block diagram of an electronic apparatus according to a sixth embodiment.
FIG. 12 is a flow diagram illustrating operation of the electronic apparatus.
FIG. 13 is a block diagram of an electronic apparatus according to a seventh embodiment.
FIG. 14 is a block diagram of an electronic apparatus according to an eighth embodiment.

### DESCRIPTION OF THE PREFERRED EMBODIMENTS

The principles of the present invention will be described below with reference to the accompanying drawings.

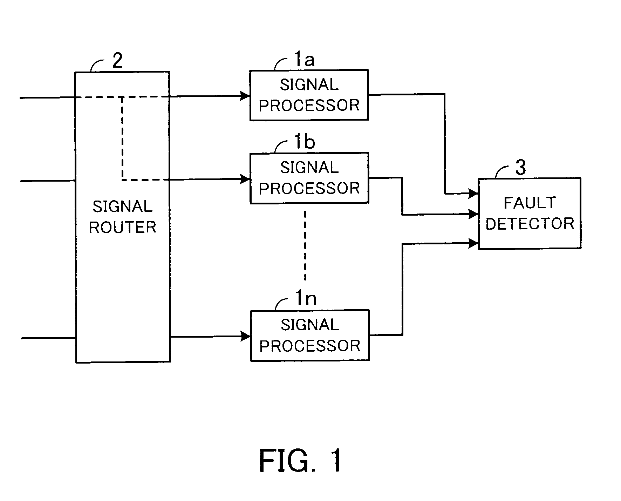

FIG. 1 illustrates an outline of an electronic apparatus. As shown in the figure, the electronic apparatus includes a plurality of signal processor circuits 1a, 1b, ..., 1n, a signal router 2, and a fault detector 3.

The signal processor circuits 1a, 1b, ..., 1n perform identical signal processing.

The signal router 2 causes a signal being input to an operating signal processor circuit which is performing the signal processing among the signal processor circuits 1a, 1b, ..., 1n to be input to an idle signal processor circuit which is not performing the signal processing.

Let it be assumed, for example, that the signal processor circuit 1a is an operating signal processor circuit which is performing the signal processing, and that the signal processor circuit 1b is an idle signal processor circuit which is not performing the signal processing. In this case, the signal router 2 causes the signal input to the signal processor circuit 1a to be input also to the signal processor circuit 1b.

The fault detector 3 compares an operating output signal output from the operating signal processor circuit with an idle output signal output from the idle signal processor circuit to detect a fault. In the above example, the signals output from the signal processor circuits 1a and 1b are compared with each other to detect a fault.

The operating signal processor circuit 1a and the idle signal processor circuit 1b are input with the same signal by means of the signal router 2. Accordingly, if a fault occurs in one or both of the signal processor circuits 1a and 1b, the result of comparison between the signals output from the circuits 1a and 1b shows non-coincidence, so that the fault detector 3 can judge that a fault has occurred in one or both of the signal processor circuits 1a and 1b.

The signal router 2 causes an identical signal to be input to the operating signal processor circuit 1a and the idle signal processor circuit 1b, and the fault detector 3 compares the outputs of the circuits 1a and 1b with each other. Accordingly, a fixed signal pattern need not be input to the signal processor circuits 1a and 1b for the purpose of fault detection. Namely, fault detection can be carried out by using the signal then input to the operating signal processor circuit 1a. Also, the idle signal processor circuit 1b which is not performing the signal processing is used for the fault detection, thus making it unnecessary to stop the operation of the apparatus.

In this manner, the signal being input to an operating signal processor circuit which is performing the signal processing is input to an idle signal processor circuit which is not performing the signal processing, and the operating output signal output from the operating signal processor circuit is compared with the idle output signal output from the idle signal processor circuit to detect a fault. Since the fault detection is performed using the signal being processed, without using a fixed signal pattern, it is possible to detect faults that cannot be detected with the fixed signal pattern. Also, an idle signal processor circuit is used for the fault detection, and therefore, the fault detection can be carried out with the operating signal processor circuit kept in operation, making it possible to detect faults even during the operation of the apparatus.

A first embodiment of the present invention will be now described in detail with reference to the drawings.

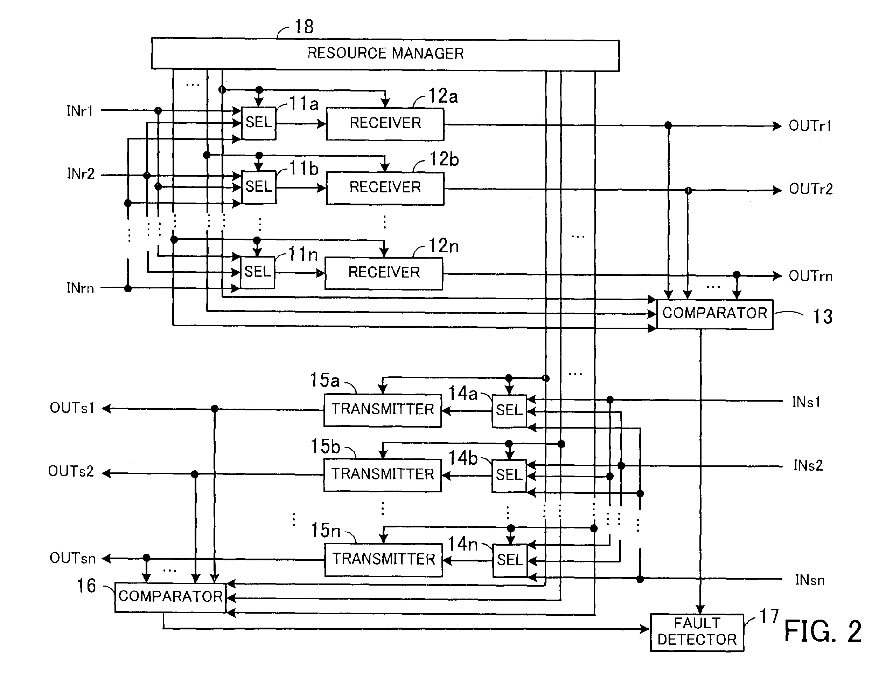

FIG. 2 is a block diagram of an electronic apparatus according to the first embodiment. As shown in the figure, the electronic apparatus includes selectors (SELs) 11a, 11b, ..., 11n, receiver circuits 12a, 12b, ..., 12n, a comparator 13, selectors 14a, 14b, ..., 14n, transmitter circuits 15a, 15b, ..., 15n, a comparator 16, a fault detector 17, and a resource manager 18.

The electronic apparatus is, for example, a communication device installed in a base station to communicate with terminals according to IMT-2000. The electronic apparatus is input with signals INr1, INr2, ..., INrn via a plurality of channels. The signals INr1, INr2, ..., INrn are received by the receiver circuits 12a, 12b, ..., 12n and are output to internal circuits as signals OUTr1, OUTr2, ..., OUTrn, respectively. Also, signals INs1, INs2, ..., INsn from internal circuits of the electronic apparatus are transmitted via the transmitter circuits 15a, 15b, ..., 15n to the outside as signals OUTs1, OUTs2, ..., OUTsn, respectively.

The selectors 11a, 11b, ..., 11n, the receiver circuits 12a, 12b, ..., 12n and the comparator 13 are circuits associated with the receiving system. The selectors 14a, 14b, ..., 14n, the transmitter circuits 15a, 15b, ..., 15n and the comparator 16 are circuits associated with the transmitting system.

In the receiving system, the selectors 11a, 11b, ..., 11n and their corresponding receiver circuits 12a, 12b, ..., 12n are adapted to process signals (INr1, INr2, ..., INrn) of the respective channels. The selector 11a and the receiver circuit 12a are associated with one channel, the selector 11b and the receiver circuit 12b are associated with another channel, and the selector 11n and the receiver circuit 12n are associated with still another channel. Similarly, in the transmitting system, the selectors 14a, 14b, ..., 14n and their corresponding transmitter circuits 15a, 15b, ..., 15n are adapted to process signals of the respective channels. The selector 14a and the transmitter circuit 15a are associated with one channel, the selector 14b and the transmitter circuit 15b are associated with another channel, and the selector 14n and the transmitter circuit 15n are associated with still another channel.

The selectors 11a, 11b, ..., 11n are input with the signals INr1, INr2, ..., INrn of the respective channels. In accordance with control signals from the resource manager 18, the selectors 11a, 11b, ..., 11n output signals INr1, INr2, ..., INrn of the specified channels to the respective receiver circuits 12a, 12b, ..., 12n.

The receiver circuits 12a, 12b, ..., 12n receive the signals INr1, INr2, ..., INrn from the selectors 11a, 11b, ..., 11n and output signals OUTr1, OUTr2, ..., OUTrn, respectively. Specifically, in accordance with control signals from the resource manager 18, the receiver circuits 12a, 12b, ..., 12n perform a reception process on the respective signals INr1, INr2, ..., INrn.

The comparator 13 compares the signals OUTr1, OUTr2, ..., OUTrn output from the receiver circuits 12a, 12b, ..., 12n. Specifically, in accordance with a control signal from the resource manager 18, the comparator 13 makes a comparison between the signals OUTr1, OUTr2, ..., OUTrn.

The resource manager 18 discriminates between channels in use and channels not in use and, with respect to the channels which are in use, outputs control signals to the selectors 11a, 11b, ..., 11n so that the signals INr1, INr2, ..., INrn may be output to the receiver circuits 12a, 12b, ..., 12n. Also, the resource manager outputs control signals to the receiver circuits 12a, 12b, ..., 12n to cause same to perform a predetermined reception process.

The control signals output to the receiver circuits 12a, 12b, ..., 12n include parameters. The receiver circuits 12a, 12b, ..., 12n carry out a process in accordance with the parameters. The parameters include, for example, codes used for the demodulation in CDMA (Code Division Multiple Access) and data for the power adjustment of signals.

For example, when a channel 1 (CH1) is to be used, that is, when the signal INr1 is input, the resource manager 18 outputs a control signal to the selector 11a so that the signal INr1 may be received by the receiver circuit 12a. Also, the resource manager outputs a control signal to the receiver circuit 12a to cause same to perform a predetermined reception process.

The signals INr1, INr2, ..., INrn may sometimes be simultaneously input via all channels, but at other times some of the channels may remain unused. For example, it is possible that all users use their terminals at the same time, but generally speaking, such a situation is rare. Thus, it is often the case that some of the receiver circuits 12a, 12b, ..., 12n associated with unused channels are idle (not operating). The electronic apparatus detects faults by using a receiver circuit associated with a channel in use and an idle receiver circuit, among the receiver circuits 12a, 12b, ..., 12n.

Let it be assumed, for example, that the channel CH1 is in use while the channel CH2 is not. In this case, the resource manager 18 outputs a control signal to the selector 11a so that the signal INr1 may be processed by the receiver circuit 12a, and also outputs a control signal to the selector 11b so that the signal INr1 may be output to the idle receiver circuit 12b as well. In addition, the resource manager 18 outputs, to the receiver circuit 12b, a control signal including the same parameters as those sent to the receiver circuit 12a so that the receiver circuit 12b may process the input signal in the same manner as the receiver circuit 12a.

Accordingly, if the receiver circuits 12a and 12b are normal, identical signals OUTr1 and OUTr2 are output from the respective circuits 12a and 12b. In accordance with a control signal from the resource manager 18, the comparator 13 compares the signals OUTr1 and OUTr2 with each other and, if the result of comparison shows non-coincidence, judges that a fault has occurred in one of the receiver circuits 12a and 12b associated with the channels CH1 and CH2.

Namely, the signal (INr1, INr2, ..., INrn) input to an operating receiver circuit, among the receiver circuits 12a, 12b, ..., 12n, is input to an idle receiver circuit, and the outputs from the operating and idle receiver circuits are compared with each other to detect a fault.

The selectors 14a, 14b, ..., 14n, the transmitter circuits 15a, 15b, ..., 15n and the comparator 16 of the transmitting system operate in the same manner as their counterparts of the receiving system, that is, the selectors 11a, 11b, ..., 11n, the receiver circuits 12a, 12b, ..., 12n and the comparator 13. The resource manager 18 outputs control signals to the selectors 14a, 14b, ..., 14n so that a signal (INs1, INs2, ..., INsn) from the internal circuit may be output to the corresponding transmitter circuit associated with a channel to be used, among the transmitter circuits 15a, 15b, ..., 15n, as well as to a transmitter circuit associated with an unused channel. Also, the resource manager outputs, to the transmitter circuit (15a, 15b, ..., 15n) associated with the idle channel, a control signal including the same parameters as those sent to the transmitter circuit associated with the channel in use.

In accordance with a control signal from the resource manager 18, the comparator 16 compares the signal (OUTs1, OUTs2, ..., OUTsn) output from the transmitter circuit (15a, 15b, ..., 15n) associated with the used channel with the signal (OUTs1, OUTs2, ..., OUTsn) output from the transmitter circuit (15a, 15b, ..., 15n) associated with the idle channel, to detect a fault.

The fault detector 17 is input with the comparison results from the comparators 13 and 16 and, if the comparison result from either of the comparators 13 and 16 shows non-coincidence of signals, outputs a fault alarm, for example.

The construction of the comparator 13 will be now described in detail.

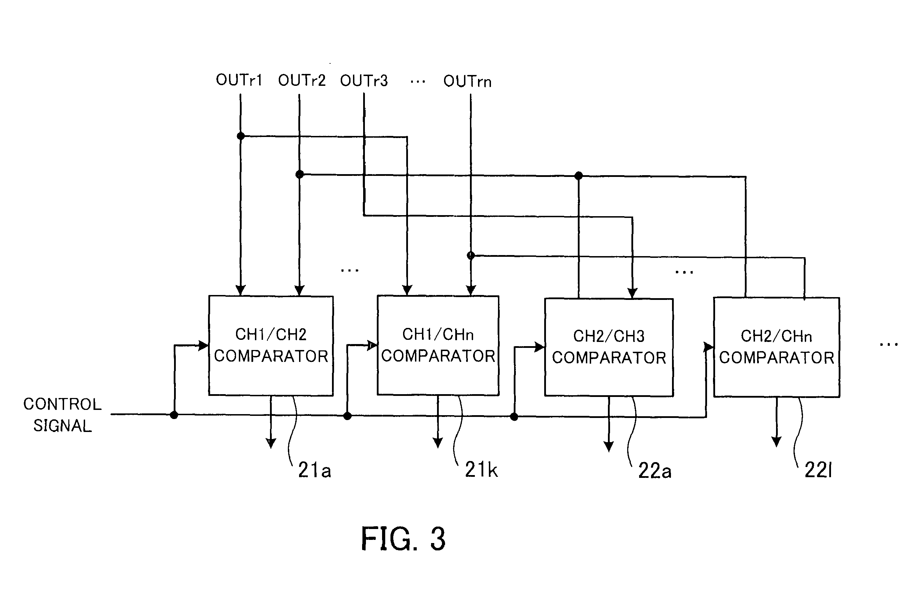

FIG. 3 is a block diagram of the comparator. The comparator 13 includes a CH1/CH2 comparator, a CH1/CH3 comparator, ..., a CH1/CHn comparator each for making a comparison between the signal OUTr1 and the corresponding one of the signals OUTr2, OUTr3, ..., OUTrn. Also, the comparator 13 includes a CH2/CH3 comparator, a CH2/CH4 comparator, ..., a CH2/CHn comparator each for making a comparison between the signal OUTr2 and the corresponding one of the signals OUTr3, OUTr4, ..., OUTrn. Further, the comparator 13 includes other similar comparators up to a CHn-1/CHn comparator for comparing the signal OUTrn-1 with the signal OUTrn. The figure shows the CH1/CH2 comparator 21a, ..., the CH1/CHn comparator 21k, the CH2/CH3 comparator 22a, ..., the CH2/CHn comparator 221, ....

In order to make a comparison with respect to all combinations of the signals OUTr1, OUTr2, ..., OUTrn, the comparator 13 includes the CH1/CH2 comparator 21a, ..., the CH1/CHn comparator 21k, the CH2/CH3 comparator 22a, ..., the CH2/CHn comparator 221, .... In accordance with control signals from the resource manager 18, the CH1/CH2 comparator 21a, ..., the CH1/CHn comparator 21k, the CH2/CH3 comparator 22a, ..., the CH2/CHn comparator 221, ... compare the respective combinations of the signals OUTr1, OUTr2, ..., OUTrn and output the comparison results to the fault detector 17 shown in FIG. 2.

The comparator 16 is configured in the same manner as the comparator 13 and includes comparators for making a comparison with respect to all combinations of the signals OUTs1, OUTs2, ..., OUTsn.

The fault detector 17 will be now described.

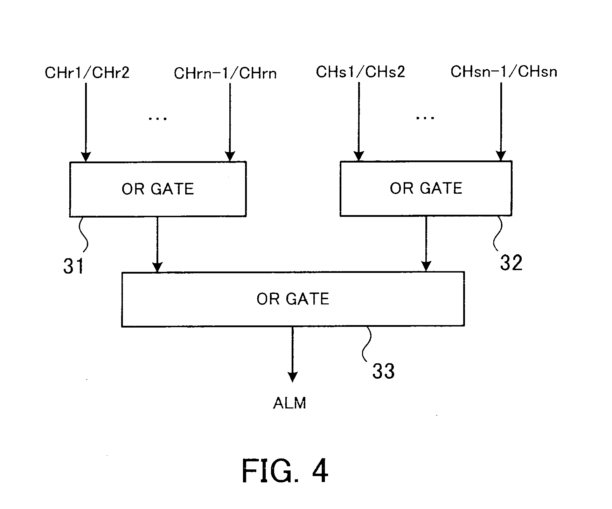

FIG. 4 is a block diagram showing details of the fault detector. As illustrated, the fault detector 17 includes OR gates 31 to 33.

The OR gate 31 is input from the comparator 13 with signals indicating the results of comparison of all combinations of the signals OUTr1, OUTr2, ..., OUTrn. In FIG. 4 are shown a comparison result signal CHr1/CHr2 indicating the result of comparison between the signals OUTr1 and OUTr2, ..., a comparison result signal CHrn-1/CHrn indicating the result of comparison between the signals OUTrn-1 and OUTrn. The OR gate 31 performs an OR operation on the input signals and outputs the result to the OR gate 33.

The OR gate 32 is input from the comparator 16 with signals indicating the results of comparison of all combinations of the signals OUTs1, OUTs2, ..., OUTsn. FIG. 4 shows a comparison result signal CHs1/CHs2 indicating the result of comparison between the signals OUTs1 and OLTTs2, ..., a comparison result signal CHsn-1/CHsn indicating the result of comparison between the signals OUTsn-1 and OUTsn. The OR gate 32 performs an OR operation on the input signals and outputs the result to the OR gate 33.

The OR gate 33 performs an OR operation on the signals output from the OR gates 31 and 32 and, if necessary, outputs an alarm signal ALM. Specifically, the OR gate 33 outputs the alarm signal ALM if the OR gate 31 or 32 is input with a signal indicative of non-coincidence of signals. This makes it possible to notify the maintenance engineer of the electronic apparatus that a fault has occurred in the electronic apparatus.

In this manner, the signal being input to an operating signal processor circuit is input to an idle signal processor circuit, and the signal output from the operating circuit is compared with the signal output from the idle circuit to detect a fault. Since the fault detection is performed using the signal being processed, without using a fixed signal pattern, it is possible to detect faults that cannot be detected with the fixed signal pattern. Also, the fault detection is carried out by using an idle circuit, and therefore, faults can be detected with the operating circuit kept in operation, thus making it possible to perform the fault detection even during the operation of the apparatus.

Especially in the case where the electronic apparatus is applied to a communication device as mentioned above, the signals INr1, INr2, ..., INrn are speech signals etc. Accordingly, the apparatus is input with various patterns of signals and thus can detect more kinds of faults that cannot be detected with a fixed signal pattern.

It is also unnecessary to use a circuit for generating the fixed signal pattern, making it possible to simplify the circuitry and reduce the cost.

A second embodiment of the present invention will be now described in detail with reference to the drawings. According to the first embodiment, a fault occurring in a channel can be notified, but it is not possible to continue the process with channels switched from the faulty channel to a normal one. In the second embodiment, when a fault has occurred in a certain channel, switching from the faulty channel to an idle channel is effected to continue the process.

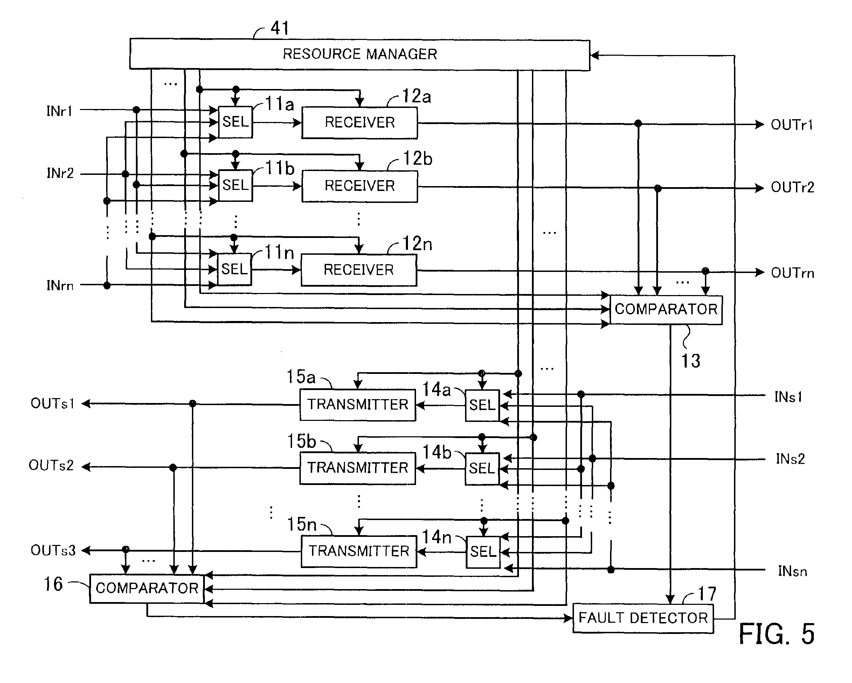

FIG. 5 is a block diagram of an electronic apparatus according to the second embodiment. In the figure, identical reference numerals are used to denote elements identical with those appearing in FIG. 2, and detailed description of such elements is omitted.

A resource manager 41 is input with an alarm signal from the fault detector 17. When an alarm signal is output from the fault detector 17, the resource manager 41 controls the receiver circuits 12a, 12b, ..., 12n in the manner described below. Specifically, of the two receiver circuits whose signals are currently compared with each other, the receiver circuit which is in operation (of which the channel is in use) is fixed while the other idle receiver circuit is switched to another idle receiver circuit. The switching is repeatedly executed until the alarm signal ceases to be output. If the alarm signal fails to cease even though the switching is performed with respect to all idle receiver circuits, the resource manager 41 switches the fixed receiver circuit to an idle receiver circuit. Then, as in the above case, the switching of idle receiver circuits is repeatedly executed until the alarm signal ceases to be output. The resource manager 41 carries out a similar process also with respect to the transmitting system.

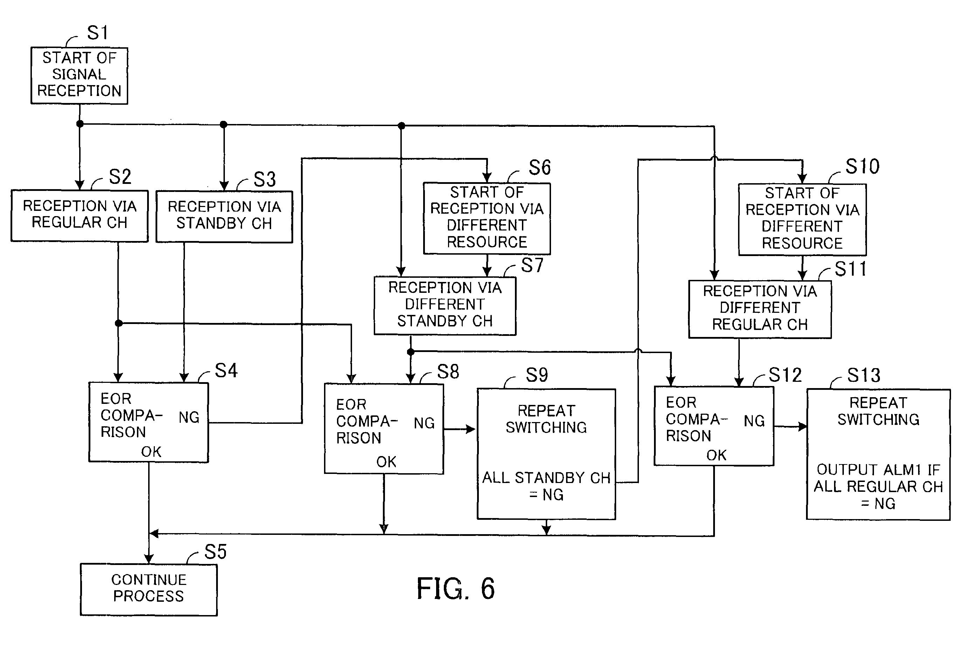

Operation of the electronic apparatus shown in FIG. 5 will be now described with reference to the flow diagram of FIG. 6.

Step S1: The electronic apparatus starts to receive signals INr1, INr2, ..., INrn.

Step S2: The resource manager 41 performs a reception process by means of a regular receiving channel (CH). Specifically, the resource manager 41 causes a signal (INr1, INr2, ..., INrn) to be input to the receiver circuit (12a, 12b, ..., 12n) corresponding to the channel to be used. For example, the resource manager 41 causes the signal INr1 to be input to the receiver circuit 12a.

Step S3: The resource manager 41 performs a reception process by means of a standby receiving channel. Specifically, the resource manager 41 causes the signal being received via the regular receiving channel to be input to an idle receiver circuit, among the receiver circuits 12a, 12b, ..., 12n, so that the signal may be received by the idle receiver circuit.

For example, if the receiver circuit 12b is idle, the resource manager 41 causes the signal INr1 received via the regular receiving channel (receiver circuit 12a) to be input to the receiver circuit 12b so that the signal INr1 may be received by the receiver circuit 12b.

Step S4: Under the control of the resource manager 41, the fault detector 17 makes an EOR (Exclusive OR) comparison between the signals received via the regular and standby receiving channels. Specifically, the fault detector 17 derives an exclusive OR of the signal OUTr1 output from the receiver circuit 12a associated with the operating channel and the signal OUTr2 output from the receiver circuit 12b associated with the idle channel. If the result of the comparison shows coincidence of the signals (OK), the flow proceeds to Step S5. On the other hand, if the comparison result shows non-coincidence (NG), that is, if one or both of the receiver circuits 12a and 12b are faulty, the flow proceeds to Step S6.

Step S5: The resource manager 41 judges that the regular receiving channel is normal, and thus continues the process. Specifically, where the electronic apparatus is a communication device, the resource manager 41 continues the process so that the signal INr1 may be continuously received by the receiver circuit 12a via the regular receiving channel until the communication process (call processing) ends.

Step S6: The resource manager 41 starts reception of the signal via a different resource.

Step S7: The resource manager 41 controls the signal so as to be received by a different standby receiving channel.

Step S8: Under the control of the resource manager 41, the fault detector 17 makes an EOR comparison between the signal received via the regular receiving channel and the signal received via the different standby receiving channel in Step S7. If the comparison result shows coincidence, the flow proceeds to Step S5; if the comparison result shows non-coincidence, the flow proceeds to Step S9.

Step S9: The resource manager 41 repeatedly switches the standby receiving channel from one to another until the EOR comparison shows coincidence of signals (OK). If, while the standby receiving channel is switched from one to another, coincidence of signals is detected by the fault detector 17 as a result of the comparison between the regular receiving channel and a certain standby receiving channel, the flow proceeds to Step S5. On the other hand, if the results of comparison between the regular receiving channel and all standby receiving channels show non-coincidence of signals, that is, if a fault has occurred in the regular receiving channel, the flow proceeds to Step S10.

Step S10: The resource manager 41 starts reception of the signal via a different resource.

Step S11: The resource manager 41 controls the signal so as to be received by a different regular receiving channel. For example, the idle receiver circuit 12b is controlled so as to act as the regular receiving channel.

Step S12: Under the control of the resource manager 41, the fault detector 17 makes an EOR comparison between the signal received via the regular receiving channel in Step S11 and the signal received via a standby receiving channel. If the comparison result shows coincidence of the signals, the flow proceeds to Step S5; if the comparison result shows non-coincidence, the flow proceeds to Step S13.

Step S13: The resource manager 41 repeatedly switches the standby receiving channel from one to another until the result of the comparison by the fault detector 17 shows coincidence of signals. If the results of comparison between the regular receiving channel and all standby receiving channels show non-coincidence of signals, the regular receiving channel is switched to a different channel. This process is repeated, and if the results of comparison between all possible pairs of regular and standby receiving channels show non-coincidence of signals, an alarm signal ALM1 is output. Namely, the alarm signal ALM1 is output if all of the receiver circuits 12a, 12b, ..., 12n are faulty.

Although a process similar to that explained above with reference to the flow diagram is performed also with respect to the transmitting system, description thereof is omitted.

In this manner, if an alarm signal is output from the fault detector 17, the electronic apparatus successively switches idle receiver circuits 12a, 12b, ..., 12n or idle transmitter circuits 15a, 15b, ..., 15n from one to another until the alarm signal ceases to be output. If the alarm signal is output with respect to all of the idle receiver or transmitter circuits, the operating receiver or transmitter circuit is successively switched to idle ones. This makes it possible to switch channels from a faulty one to a proper one, thus permitting the communication process to be continued.

It is also possible to identify a faulty circuit from among the receiver circuits 12a, 12b, ..., 12n and the transmitter circuits 15a, 15b, ..., 15n. For example, in the case where the results of comparison between a certain regular receiving channel and all standby receiving channels show non-coincidence of signals, as mentioned above with reference to FIG. 6, the regular receiving channel can be judged to be faulty.

A third embodiment of the present invention will be now described in detail with reference to the drawing. In the first embodiment, a fault is detected by comparing the signals of each channel pair, and therefore, the number of comparisons to be made increases with increase in the number of channels. According to the third embodiment, the channels are grouped into blocks and signals are compared on a block-by-block basis to detect a fault.

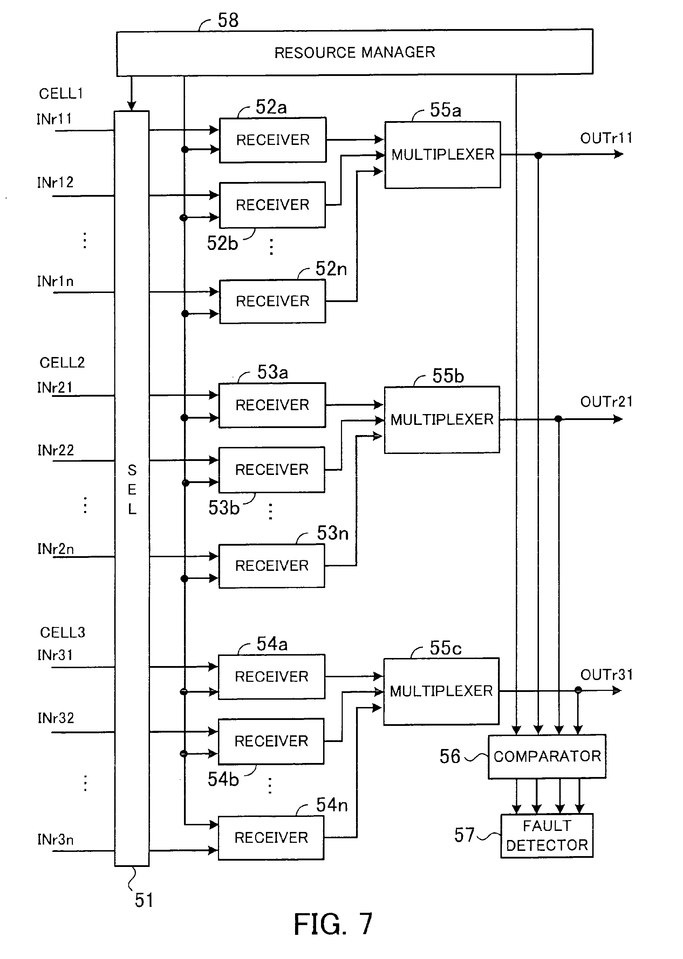

FIG. 7 is a block diagram of an electronic apparatus according to the third embodiment. As shown in the figure, the electronic apparatus includes a selector 51, receiver circuits 52a, 52b, ..., 52n, 53a, 53b, ..., 53n and 54a, 54b, ..., 54n, multiplexer circuits 55a to 55c, a comparator 56, and a fault detector 57.

The selector 51 is input with signals INr11, INr12, ..., INr1n, INr21, INr22, ..., INr2n and INr31, INr32, ..., INr3n. The signals INr11, INr12, ..., INr1n, INr21, INr22, ..., INr2n and INr31, INr32, ..., INr3n are grouped into blocks. In the case where the electronic apparatus is a communication device, for example, the signals are grouped by cell. In the illustrated example, the signals INr11, INr12, ..., INr1n are grouped under a cell CELL1, the signals INr21, INr22, ..., INr2n are grouped under a cell CELL2, and the signals INr31, INr32, ..., INr3n are grouped under a cell CELL3. The signals INr11, INr12, ..., INr1n, the signals INr21, INr22, ..., INr2n and the signals INr31, INr32, ..., INr3n are individually identified by channels 1, 2, ..., n in their respective cells CELL1 to CELL3.

Under the control of a resource manager 58, the selector 51 routes the signals INr11, INr12, ..., INr1n of the cell CELL1, the signals INr21, INr22, ..., INr2n of the cell CELL2, and the signals INr31, INr32, ..., INr3n of the cell CELL3. For example, the selector 51 switches the signals INr11, INr12, ..., INr1n of the cell CELL1 to be output to the receiver circuits 52a, 52b, ..., 52n, or the receiver circuits 53a, 53b, ..., 53n, or the receiver circuits 54a, 54b, ..., 54n.

The receiver circuits 52a, 52b, ..., 52n, 53a, 53b, ..., 53n and 54a, 54b, ..., 54n are identical with the receiver circuits 12a, 12b, ..., 12n explained above with reference to FIG. 2 and perform a reception process on the input signals INr11, INr12, ..., INr1n, INr21, INr22, ..., INr2n, and INr31, INr32, ..., INr3n.

The multiplexer circuits 55a to 55c multiplex the signals output from the receiver circuits 52a, 52b, ..., 52n, 53a, 53b, ..., 53n and 54a, 54b, ..., 54n, and output signals OUTr11, OUTr21, and OUTr31, respectively.

In accordance with a control signal from the resource manager 58, the comparator 56 compares the signal from the receiver circuits of a cell which is currently in use, among the cells CELL1 to CELL3, with the signal from the receiver circuits of an idle cell to detect a fault.

The fault detector 57 is input with the comparison result from the comparator 56 and, if the comparison result shows that the signals do not coincide, outputs a fault alarm, for example.

The receiver circuits 52a, 52b, ..., 52n and the multiplexer circuit 55a perform signal processing for the single cell CELL1. Similarly, the receiver circuits 53a, 53b, ..., 53n and the multiplexer circuit 55b perform signal processing for the single cell CELL2, and the receiver circuits 54a, 54b, ..., 54n and the multiplexer circuit 55c perform signal processing for the single cell CELL3.

Let it be assumed here that the receiver circuits 52a, 52b, ..., 52n of the cell CELL1 are in operation while the receiver circuits 53a, 53b, ..., 53n of the cell CELL2 are idle. In this case, the resource manager 58 outputs a control signal to the selector 51 so that the signals INr11, INr12, ..., INr1n of the cell CELL1 may be output to the operating receiver circuits 52a, 52b, ..., 52n as well as to the idle receiver circuits 53a, 53b, ..., 53n. Also, the resource manager 58 outputs control signals including identical parameters to the receiver circuits 52a, 52b, ..., 52n and the receiver circuits 53a, 53b, ..., 53n so that an identical reception process may be performed by these receiver circuits.

The multiplexer circuits 55a and 55b multiplex the respective sets of signals output from the receiver circuits 52a, 52b, ..., 52n and the receiver circuits 53a, 53b, ..., 53n. The comparator 56 then makes a comparison between the signals OUTr11 and OUTr21 output from the multiplexer circuits 55a and 55b. If the result of the comparison by the comparator 56 shows that the signals coincide, the fault detector 57 judges that the cell CELL1 system (receiver circuits 52a, 52b, ..., 52n and multiplexer circuit 55a) and the cell CELL2 system (receiver circuits 53a, 53b, ..., 53n and multiplexer circuit 55b) are normal. If the comparison result from the comparator 56 shows that the signals do not coincide, it can be judged that the cell CELL1 system and the cell CELL2 system are anomalous.

In this manner, the channels are grouped into blocks and signals are compared on a block-by-block basis to detect a fault. Consequently, even if the number of channels is large, the number of signals to be compared can be reduced, making it possible to simplify the circuit configuration of the comparator 56 and thus to reduce the cost.

Although the above description is directed only to the receiving system, the transmitting system may also have a similar block configuration to detect faults.

A fourth embodiment of the present invention will be now described in detail with reference to the drawings. According to the third embodiment, a fault occurring in a block (cell) can be notified, but it is not possible to continue the process with blocks switched from the faulty block to a normal one. In the fourth embodiment, when a fault has occurred in a certain block, switching from the faulty block to a normal block is performed to continue the process.

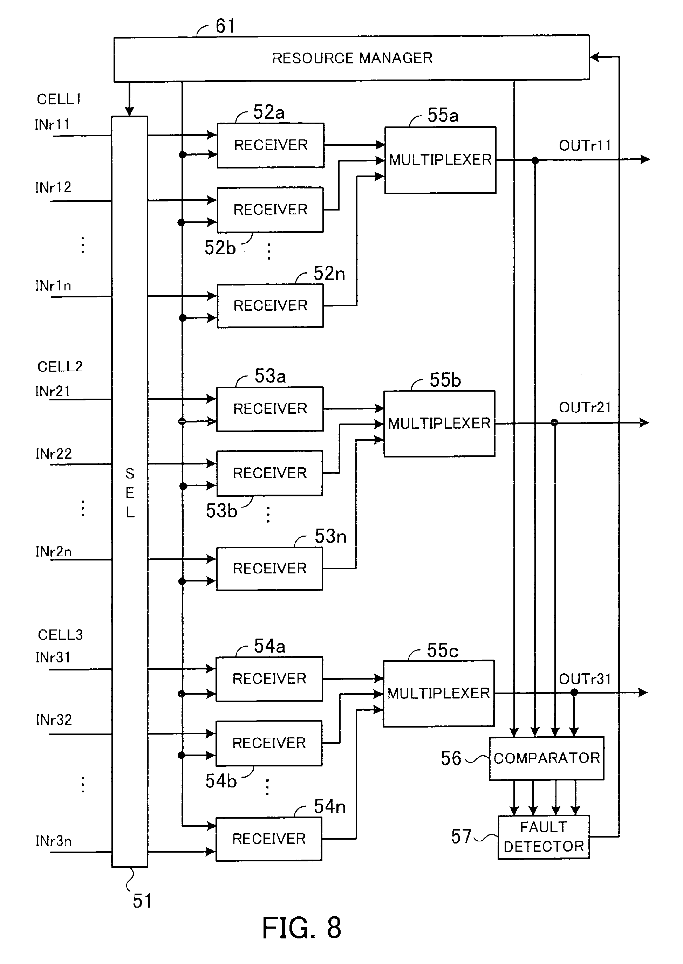

FIG. 8 is a block diagram of an electronic apparatus according to the fourth embodiment. In the figure, identical reference numerals are used to denote elements identical with those appearing in FIG. 7, and detailed description of such elements is omitted.

A resource manager 61 is input with an alarm signal from the fault detector 57. When an alarm signal is output from the fault detector 57, the resource manager 61 outputs control signals such that, of the two blocks (cells) whose signals are currently compared with each other, the operating cell is fixed while the other idle cell is switched to another idle cell. The switching is repeatedly executed until the alarm signal ceases to be output. If the alarm signal fails to cease even though the switching is performed with respect to all idle cells, the resource manager 61 switches the fixed cell to an idle cell. Then, as in the above case, the switching of idle cells is repeatedly executed until the alarm signal ceases to be output. The resource manager 61 performs a similar process also with respect to the transmitting system.

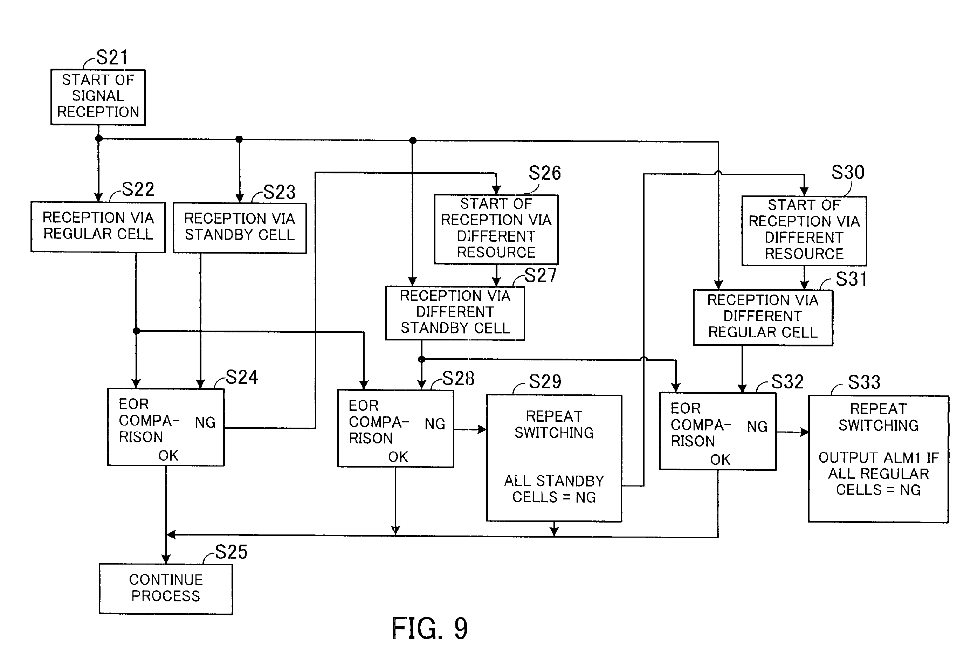

Operation of the electronic apparatus shown in FIG. 8 will be now described with reference to the flow diagram of FIG. 9.

Step S21: The electronic apparatus starts to receive signals INr11, INr12, ..., INr1n.

Step S22: The resource manager 61 performs a reception process by means of a regular receiving cell. Specifically, the resource manager 61 causes signals to be input to the cell to be operated. For example, the resource manager 61 causes the signals INr11, INr12, ..., INr1n to be input to the respective receiver circuits 52a, 52b, ..., 52n associated with the cell to be operated.

Step S23: The resource manager 61 performs a reception process by means of a standby receiving cell. Specifically, the resource manager 61 causes the signals being applied to the regular receiving cell to be input to the receiver circuits of an idle cell. For example, the resource manager 61 causes the signals being applied to the regular receiving cell (receiver circuits 52a, 52b, ..., 52n) to be input to the idle receiver circuits 53a, 53b, ..., 53n so that the signals may be received also by the respective idle receiver circuits.

Step S24: Under the control of the resource manager 61, the fault detector 57 makes an EOR comparison between the signal received and multiplexed by the regular receiving cell and the signal received and multiplexed by the standby receiving cell. Specifically, the fault detector 57 derives an exclusive OR of the signal OUTr11 output from the multiplexer circuit 55a of the operating cell and the signal OUTr21 output from the multiplexer circuit 55b of the idle cell. If the comparison result shows that the signals coincide, the flow proceeds to Step S25. On the other hand, if the comparison result shows non-coincidence, that is, if one or both of the receiver circuit group (52a, 52b, ..., 52n) and the receiver circuit group (53a, 53b, ..., 53n) are faulty, the flow proceeds to Step S26.

Step S25: The resource manager 61 judges that the regular receiving cell is normal, and thus continues the process. Specifically, where the electronic apparatus is a communication device, for example, the resource manager 61 continues the process so that the signals INr11, INr12, ..., INr1n may be continuously received by the respective receiver circuits 52a, 52b, ..., 52n of the regular receiving cell until the communication process (call processing) ends.

Step S26: The resource manager 61 starts reception of the signals via a different resource.

Step S27: The resource manager 61 controls the signals so as to be received by a different standby receiving cell.

Step S28: Under the control of the resource manager 61, the fault detector 57 makes an EOR comparison between the signal received and multiplexed by the regular receiving cell and the signal received and multiplexed by the standby receiving cell in Step S27. If the comparison result shows coincidence of the signals, the flow proceeds to Step S25; if the comparison result shows non-coincidence, the flow proceeds to Step S29.

Step S29: The resource manager 61 repeatedly switches the standby receiving cell from one to another (on the assumption that the number of cells is three or more) until the EOR comparison shows coincidence of signals (OK). If, while the standby receiving cell is switched from one to another, coincidence of signals is detected by the fault detector 57 as a result of the comparison between the regular and standby receiving cells, the flow proceeds to Step S25. On the other hand, if the results of comparison between the regular receiving cell and all standby receiving cells show non-coincidence of signals, that is, if a fault has occurred in the regular receiving cell, the flow proceeds to Step S30.

Step S30: The resource manager 61 starts reception of the signals via a different resource.

Step S31: The resource manager 61 controls the signals so as to be received by a different regular receiving cell. For example, the idle receiver circuits 53a, 53b, ..., 53n are controlled so as to act as the regular receiving cell.

Step S32: Under the control of the resource manager 61, the fault detector 57 makes an EOR comparison between the signal received and multiplexed by the regular receiving cell in Step S31 and the signal received and multiplexed by a standby receiving cell. If the comparison result shows coincidence of the signals, the flow proceeds to Step S25; if the comparison result shows non-coincidence, the flow proceeds to Step S33.

Step S33: The resource manager 61 repeatedly switches the standby receiving cell from one to another until the result of the comparison by the fault detector 57 shows coincidence of signals. If the results of comparison between the regular receiving cell and all standby receiving cells show non-coincidence of signals, the regular receiving cell is switched to a different cell. This process is repeated, and if the results of comparison between all possible pairs of regular and standby receiving cells show non-coincidence of signals, an alarm signal ALM1 is output. Namely, the alarm signal ALM1 is output if the receiver circuits of all cells are faulty.

Although a process similar to that explained above with reference to the flow diagram is performed also with respect to the transmitting system, description thereof is omitted.

In this manner, if an alarm signal is output from the fault detector 57, the electronic apparatus successively switches idle receiver circuits or idle transmitter circuits from one cell to another until the alarm signal ceases to be output. If the alarm signal is output with respect to the receiver or transmitter circuits of all idle cells, the operating receiver or transmitter circuits are successively switched from one cell to another. This makes it possible to switch cells from a faulty one to a proper one, thus permitting the communication process to be continued.

It is also possible to identify faulty receiver or transmitter circuits. For example, in the case where the results of comparison between a certain regular receiving cell and all standby receiving cells show non-coincidence of signals, as mentioned above with reference to FIG. 9, the regular receiving cell can be judged to be faulty.

A fifth embodiment of the present invention will be now described in detail with reference to the drawing. In some base stations for mobile communications, a communication device is used which has a diversity function and in which one channel is made up of a plurality of branches (e.g., two branches). In the fifth embodiment, the outputs of the individual branches are compared for fault detection.

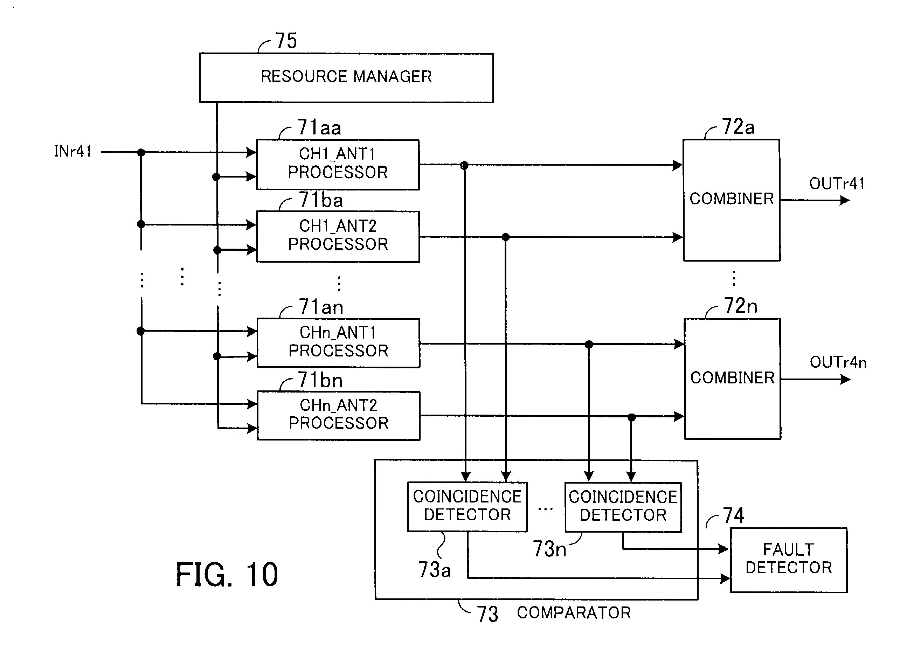

FIG. 10 is a block diagram of an electronic apparatus according to the fifth embodiment. As shown in the figure, the electronic apparatus includes a CH1_ANT1 processor circuit 71aa, a CH1_ANT2 processor circuit 71ba, ..., a CHn_ANT1 processor circuit 71an, a CHn_ANT2 processor circuit 71bn, combiner circuits 72a, ..., 72n, a comparator 73, a fault detector 74, and a resource manager 75.

The electronic apparatus is, for example, a communication device installed in a base station and adapted to communicate with terminals according to IMT-2000. The electronic apparatus is input with a signal INr41 received by antennas and has a diversity function such that the signal reception per channel is carried out using two branches, for example.

The CH1_ANT1 processor circuit 71aa and the CH1_ANT2 processor circuit 71ba perform a reception process for a channel 1 multiplexed into the signal INr41. Namely, the CH1 ANT1 processor circuit 71aa and the CH1_ANT2 processor circuit 71ba constitute two branches for the channel 1. In accordance with control signals from the resource manager 75, the CH1_ANT1 processor circuit 71aa and the CH1_ANT2 processor circuit 71ba carry out the reception process. Similarly, the CHn_ANT1 processor circuit 71an and the CHn_ANT2 processor circuit 71bn constitute two branches and carry out a reception process for a channel n multiplexed into the signal INr41.

The combiner circuits 72a, ..., 72n combine respective pairs of signals output from the CH1 ANT1 processor circuit 71aa, the CH1_ANT2 processor circuit 71ba, ..., the CHn_ANT1 processor circuit 71an and the CHn ANT2 processor circuit 71bn, and output signals OUTr41, ..., OUTr4n to internal circuits.

The comparator 73 makes a comparison between the signals of the individual channels, output from the CH1_ANT1 processor circuit 71aa, the CH1_ANT2 processor circuit 71ba, ..., the CHn_ANT1 processor circuit 71an, and the CHn_ANT2 processor circuit 71bn. To this end, the comparator 73 includes coincidence detectors 73a, ..., 73n.

The coincidence detector 73a compares the signals of the channel 1 with each other, output from the CH1_ANT1 processor circuit 71aa and the CH1_ANT2 processor circuit 71ba. Similarly, the coincidence detector 73n compares the signals of the channel n with each other, output from the CHn_ANT1 processor circuit 71an and the CHn ANT2 processor circuit 71bn.

When a signal indicating non-coincidence of signals is output from the comparator 73, the fault detector 74 judges that a fault has occurred.

Because of the diversity function, the electronic apparatus has a plurality of branches (in the illustrated example, two branches) of receiver circuits (CH1_ANT1 processor circuit 71aa, CH1_ANT2 processor circuit 71ba, ..., CHn_ANT1 processor circuit 71an, and CHn_ANT2 processor circuit 71bn) with respect to each of the channels included in the signal INr41, as mentioned above. The receiver circuits of each channel perform respective different phasing processes etc. on the signal INr41 in accordance with the parameters included in the control signals from the resource manager 75.

Depending on the specifications, however, the diversity function may be unnecessary. In such cases, one of the receiver circuits of each channel is redundant. Thus, one receiver circuit is made to be applied with a control signal including the same parameters as those sent to the other receiver circuit so that both of the receiver circuits may perform the same reception process on the signal INr41. This allows the two receiver circuits of each channel to output identical signals if the circuits are normal.

Accordingly, by making the comparator 73 compare each pair of signals output from the CH1_ANT1 processor circuit 71aa, the CH1_ANT2 processor circuit 71ba, ..., the CHn_ANT1 processor circuit 71an and the CHn_ANT2 processor circuit 71bn, it is possible to detect faults in the CH1_ANT1 processor circuit 71aa, the CH1_ANT2 processor circuit 71ba, ..., the CHn_ANT1 processor circuit 71an and the CHn_ANT2 processor circuit 71bn associated with the respective channels.

In this manner, a plurality of branches (receiver circuits) for processing signals of an identical channel are caused to perform the same reception process and the outputs therefrom are compared with each other, whereby a fault can be detected.

A sixth embodiment of the present invention will be now described in detail with reference to the drawings. According to the fifth embodiment, a fault occurring in a channel can be notified, but it is not possible to continue the process with channels switched from the faulty channel to a normal one. In the sixth embodiment, when a fault has occurred in a certain channel, switching from the faulty channel to a normal channel is effected to permit the process to be continued.

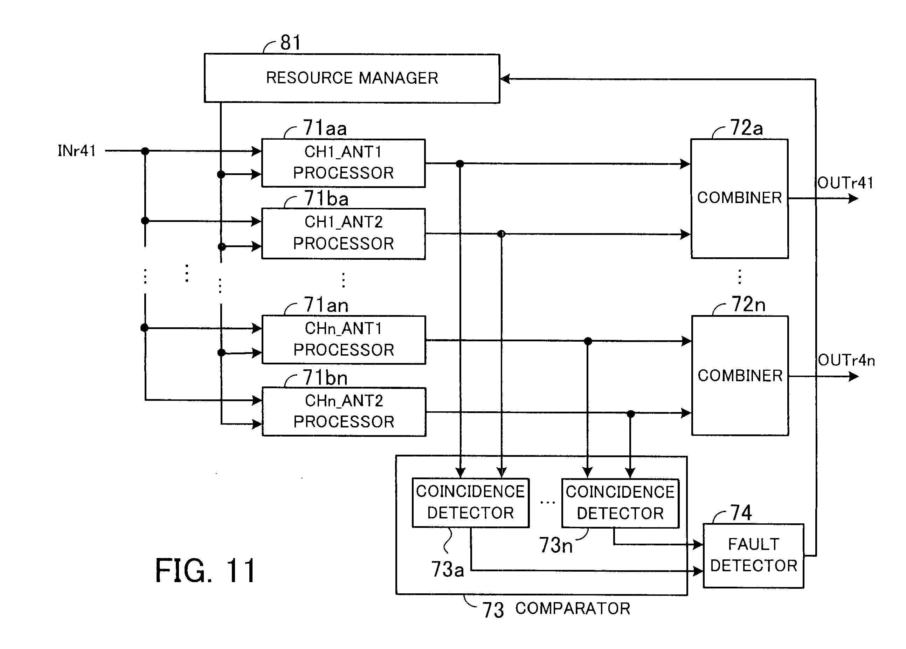

FIG. 11 is a block diagram of an electronic apparatus according to the sixth embodiment. In the figure, identical reference numerals are used to denote elements identical with those appearing in FIG. 10, and detailed description of such elements is omitted.

A resource manager 81 is input with an alarm signal from the fault detector 74. When an alarm signal is output from the fault detector 74, the resource manager 81 causes currently idle receiver circuits to carry out the same reception process as that performed by the currently operating receiver circuits.

Let it be assumed, for example, that an alarm signal is output (a fault is detected) with respect to the CH1_ANT1 processor circuit 71aa and the CH1_ANT2 processor circuit 71ba associated with the channel 1. In this case, the processor circuits of an idle channel, for example, CH2_ANT1 and CH2_ANT2 processor circuits associated with the channel 2, not shown, are caused to carry out the same reception process as that performed by the CH1_ANT1 processor circuit 71aa and the CH1_ANT2 processor circuit 71ba. The resource manager 81 repeatedly carries out the switching of signals to an idle channel until the alarm signal ceases to be output.

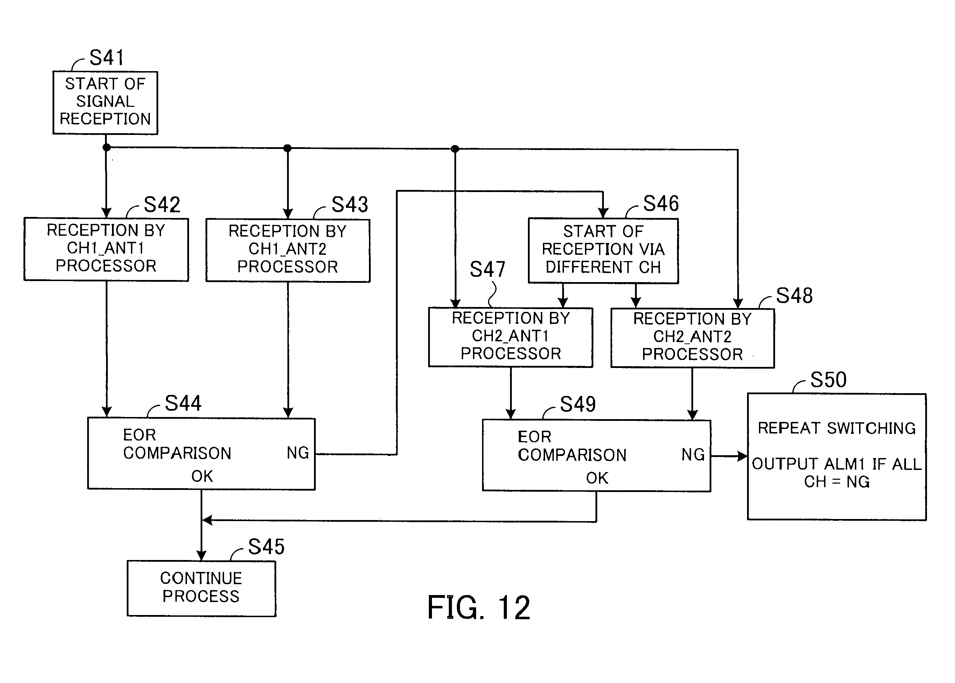

Operation of the electronic apparatus shown in FIG. 11 will be now described with reference to the flow diagram of FIG. 12.

Step S41: The electronic apparatus starts to receive the signal INr41.

Step S42: The resource manager 81 causes the CH1_ANT1 processor circuit 71aa to perform a reception process on the signal INr41.

Step S43: The resource manager 81 causes the CH1_ANT2 processor circuit 71ba to perform the reception process on the signal INr41. The resource manager 81 supplies the CH1_ANT2 processor circuit 71ba with a control signal including the same parameters as those sent to the CH1_ANT1 processor circuit 71aa.

Step S44: Under the control of the resource manager 81, the comparator 73 makes an EOR comparison between the signal output from the CH1_ANT1 processor circuit 71aa and the signal output from the CH1_ANT2 processor circuit 71ba. If the comparison result shows that the signals coincide, the flow proceeds to Step S45. On the other hand, if the comparison result shows non-coincidence, that is, if one or both of the CH1_ANT1 processor circuit 71aa and the CH1_ANT2 processor circuit 71ba are faulty, the flow proceeds to Step S46.

Step S45: The resource manager 81 judges that the operating CH1_ANT1 processor circuit 71aa is normal, and thus continues the process. Specifically, where the electronic apparatus is a communication device, for example, the resource manager 81 continues the process so that the signal INr41 may be continuously received by the CH1_ANT1 processor circuit 71aa until the communication process (call processing) ends.

Step S46: The resource manager 81 causes some other receiver circuits associated with an idle channel to perform the reception process.

Steps S47 & S48: If the channel 2 is idle, for example, the resource manager 81 causes the CH2_ANT1 and CH2_ANT2 processor circuits associated with the channel 2 to perform the reception process.

Step S49: Under the control of the resource manager 81, the comparator 73 makes an EOR comparison between the signal output from the CH2_ANT1 processor circuit and the signal output from the CH2_ANT2 processor circuit. If the comparison result shows coincidence of the signals, the flow proceeds to Step S45. On the other hand, if the comparison result shows non-coincidence, that is, if one or both of the CH2_ANT1 and CH2_ANT2 processor circuits are faulty, the flow proceeds to Step S50.

Step S50: The resource manager 81 repeatedly switches the receiver circuits from one idle channel to another, among CH3_ANT1 and CH3_ANT2 processor circuits, ..., and the CHn_ANT1 and CHn_ANT2 processor circuits, until the result of the comparison by the comparator 73 shows coincidence of signals. If the results of comparison between all pairs of idle receiver circuits show non-coincidence of signals, the fault detector 74 outputs an alarm signal ALM1. Namely, in this case, the fault detector 74 judges that the receiver circuits of all channels, that is, the CH1_ANT1 processor circuit 71aa, the CH1_ANT2 processor circuit 71ba, ..., the CHn_ANT1 processor circuit 71an and the CHn_ANT2 processor circuit 71bn, are faulty.

In this manner, if an alarm signal is output from the fault detector 74, the electronic apparatus successively switches the receiver circuits from one idle channel to another until the alarm signal ceases to be output. This permits signals to be processed by normal receiver circuits.

A seventh embodiment of the present invention will be now described in detail with reference to the drawing. In the fifth embodiment, the fault detection is applied to the reception process of the electronic apparatus having the diversity function. According to the seventh embodiment, the fault detection is applied to the transmission process.

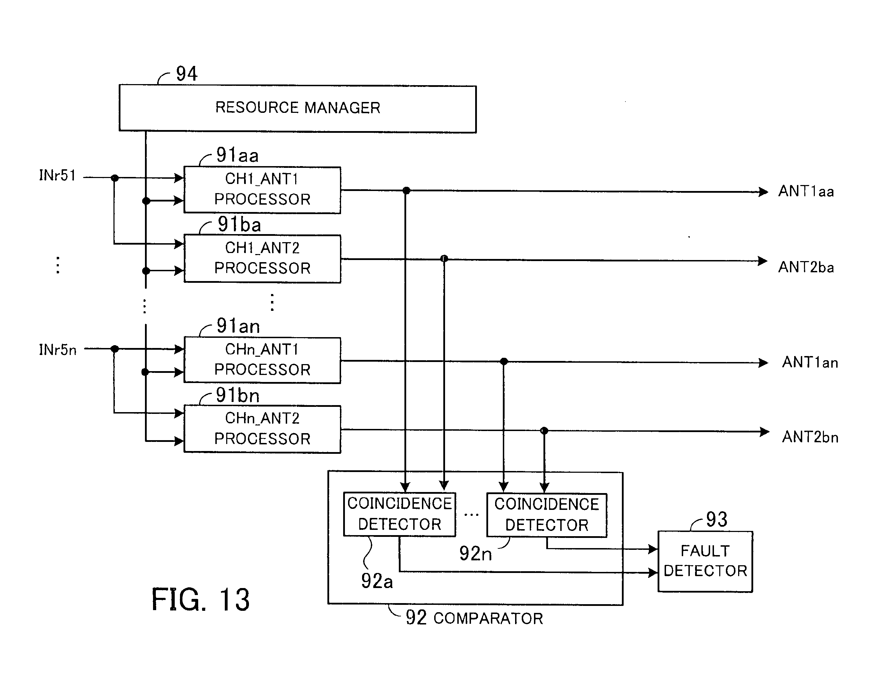

FIG. 13 is a block diagram of an electronic apparatus according to the seventh embodiment. As shown in the figure, the electronic apparatus includes a CH1_ANT1 processor circuit 91aa, a CH1_ANT2 processor circuit 91ba, ..., a CHn_ANT1 processor circuit 91an, a CHn_ANT2 processor circuit 91bn, a comparator 92, a fault detector 93, and a resource manager 94.

The electronic apparatus is, for example, a communication device installed in a base station and adapted to communicate with terminals according to IMT-2000. The electronic apparatus is input with signals INr51, ..., INr5n to be transmitted to respective terminals and has a diversity function such that the signal transmission per channel is carried out using two branches, for example.

The CH1_ANT1 processor circuit 91aa and the CH1_ANT2 processor circuit 91ba perform a transmission process on the signal INr51. Namely, in accordance with control signals from the resource manager 94, the CH1_ANT1 processor circuit 91aa and the CH1_ANT2 processor circuit 91ba carry out the transmission process. Likewise, the CHn_ANT1 processor circuit 91an and the CHn_ANT2 processor circuit 91bn carry out a transmission process on the signal INr5n.

The comparator 92 makes a comparison between the signals of the individual channels, output from the CH1_ANT1 processor circuit 91aa, the CH1_ANT2 processor circuit 91ba, ..., the CHn_ANT1 processor circuit 91an, and the CHn_ANT2 processor circuit 91bn. To this end, the comparator 92 includes coincidence detectors 92a, ..., 92n.

The coincidence detector 92a compares the signals of the channel 1 with each other, output from the CH1_ANT1 processor circuit 91aa and the CH1_ANT2 processor circuit 91ba. Similarly, the coincidence detector 92n compares the signals of the channel n with each other, output from the CHn_ANT1 processor circuit 91an and the CHn_ANT2 processor circuit 91bn.

When a signal indicative of non-coincidence of signals is output from the comparator 92, the fault detector 93 judges that a fault has occurred.

Because of the diversity function, the electronic apparatus has a plurality of branches (in the illustrated example, two branches) of transmitter circuits (CH1_ANT1 processor circuit 91aa, CH1_ANT2 processor circuit 91ba, ..., CHn-ANT1 processor circuit 91an, and CHn_ANT2 processor circuit 91bn) with respect to each of the signals INr51, ..., INr5n of respective channels, as mentioned above. The transmitter circuits of each channel perform respective different phasing processes etc. on the corresponding one of the signals INr51, ..., INr5n, in accordance with the parameters included in the control signals from the resource manager 94.

Depending on the specifications, however, the diversity function may not be required, and in such cases, one of the transmitter circuits of each channel is unnecessary. Accordingly, one transmitter circuit is made to be applied with a control signal including the same parameters as those sent to the other transmitter circuit so that both of the transmitter circuits may perform the same transmission process on the corresponding one of the signals INr51, ..., INr5n. This causes the two transmitter circuits of each channel to output identical signals if the circuits are normal.

Thus, by making the comparator 92 compare each pair of signals output from the CH1_ANT1 processor circuit 91aa, the CH1_ANT2 processor circuit 91ba, ..., the CHn_ANT1 processor circuit 91an and the CHn_ANT2 processor circuit 91bn, it is possible to detect faults in the CH1_ANT1 processor circuit 91aa, the CH1_ANT2 processor circuit 91ba, ..., the CHn_ANT1 processor circuit 91an and the CHn_ANT2 processor circuit 91bn associated with the respective channels.

In this manner, a plurality of branches (transmitter circuits) for processing signals of an identical channel are caused to perform the same transmission process and the outputs therefrom are compared with each other, whereby a fault can be detected.

An eighth embodiment of the present invention will be now described in detail with reference to the drawing. According to the seventh embodiment, a fault occurring in a channel can be notified, but it is not possible to continue the process with channels switched from the faulty channel to a normal one. In the eighth embodiment, when a fault has occurred in a certain channel, switching from the faulty channel to a normal channel is effected to permit the process to be continued.

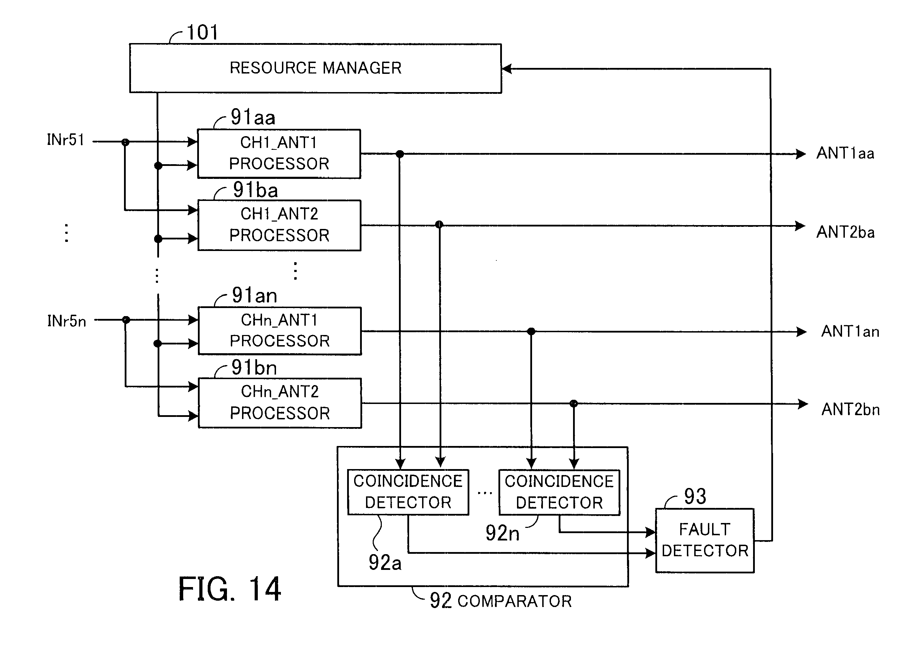

FIG. 14 is a block diagram of an electronic apparatus according to the eighth embodiment. In the figure, identical reference numerals are used to denote elements identical with those appearing in FIG. 13, and detailed description of such elements is omitted.

A resource manager 101 is input with an alarm signal from the fault detector 93. When an alarm signal is output from the fault detector 93, the resource manager 101 causes currently idle transmitter circuits to carry out the same transmission process as that performed by the currently operating transmitter circuits.

Let it be assumed, for example, that an alarm signal is output (a fault is detected) with respect to the CH1_ANT1 processor circuit 91aa and the CH1_ANT2 processor circuit 91ba associated with the channel 1. In this case, the processor circuits of an idle channel, for example, CH2_ANT1 and CH2_ANT2 processor circuits associated with the channel 2, not shown, are caused to carry out the same transmission process as that performed by the CH1_ANT1 processor circuit 91aa and the CH1 ANT2 processor circuit 91ba. The resource manager 101 repeatedly carries out the switching of signals to an idle channel until the alarm signal ceases to be output.

In this manner, if an alarm signal is output from the fault detector 93, the electronic apparatus successively switches the transmitter circuits from one idle channel to another until the alarm signal ceases to be output. This permits signals to be processed by normal transmitter circuits.

With the electronic apparatus according to the present invention, the signal being input to an operating signal processor circuit which is performing signal processing is input to an idle signal processor circuit which is not performing the signal processing, and an operating output signal output from the operating signal processor circuit and an idle output signal output from the idle signal processor circuit are compared with each other to detect a fault. Since the fault detection is performed using the signal being processed, without using a fixed signal pattern, it is possible to detect faults that cannot be detected with the fixed signal pattern. Also, an idle signal processor circuit is used for the fault detection, and therefore, the fault detection can be carried out with the operating signal processor circuit kept in operation, making it possible to detect faults even during the operation of the apparatus.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

## Claims

1. An electronic apparatus for detecting faults, comprising:
a plurality of signal processor circuits for performing identical signal processing;
signal router means for causing a signal being input to an operating signal processor circuit which is performing the signal processing among the signal processor circuits, to be input to one idle signal processor circuit which is not performing the signal processing among the signal processor circuits; and
fault detector means for comparing an operating output signal output from the operating signal processor circuit with an idle output signal output from the idle signal processor circuit to detect a fault.

2. The electronic apparatus according to claim 1, wherein the signal router means causes the signal to be input to a different idle signal processor circuit different from the one idle signal processor circuit in accordance with a result of comparison by the fault detector means.

3. The electronic apparatus according to claim 2, wherein, if the result of comparison by the fault detector means keeps showing non-coincidence of signals even though the signal is input to all idle signal processor circuits, the signal router means causes one of the idle signal processor circuits to operate as the operating signal processor circuit.

4. The electronic apparatus according to claim 1, further comprising multiplexer circuits associated with respective blocks into which the plurality of signal processor circuits are grouped, the multiplexer circuits being adapted to multiplex output signals output from the respective blocks of signal processor circuits,
wherein the signal router means causes signals being input to an operating block of signal processor circuits to be input to one idle block of signal processor circuits, and
the fault detector means compares an operating multiplexed signal from the multiplexer circuit obtained by multiplexing the output signals output from the operating block of signal processor circuits with an idle multiplexed signal from the multiplexer circuit obtained by multiplexing the output signals output from the idle block of signal processor circuits.

5. The electronic apparatus according to claim 4, wherein the signal router means causes the signals to be input to a different idle block of signal processor circuits different from the one idle block in accordance with a result of comparison by the fault detector means.

6. The electronic apparatus according to claim 5, wherein, if the result of comparison by the fault detector means keeps showing non-coincidence of signals even though the signals are input to all idle blocks of signal processor circuits, the signal router means causes one of the idle blocks of signal processor circuits to operate as the operating block of signal processor circuits.

7. An electronic apparatus for detecting faults, comprising:
a plurality of signal processor circuits associated with each of channels and adapted to process signals of an identical channel;
signal processing control means for causing the signal processor circuits to perform identical signal processing on the signals; and
fault detector means for comparing output signals output from the signal processor circuits with each other to detect a fault.

8. The electronic apparatus according to claim 7, wherein the electronic apparatus has no diversity function, and the signal processing control means causes the signal processor circuits to perform identical signal processing on the signals.

9. The electronic apparatus according to claim 7, wherein, if a result of comparison by the fault detector means shows non-coincidence of the signals, the signal processing control means causes the signals to be input to the signal processor circuits associated with an idle channel.
